# EUROPEAN PATENT APPLICATION

(11) **EP 2 782 089 A2**
(43) Date of publication of application: **24.09.2014**
(21) Application number: 14160478.5
(22) Date of filing: 18.03.2014
(51) Int. Cl.: G09F 13/18, G09F 13/14, G09F 13/22

(54) **Display device**

(30) Priority: 21.03.2013 JP 2013058675
(71) Applicant: KABUSHIKI KAISHA TOKAI RIKA DENKI SEISAKUSHO, Niwa-gun, Aichi 480-0195 (JP)
(72) Inventor: Okura, Satoshi, Aichi 480-0195 (JP); Aoki, Yoshiyuki, Aichi 480-0195 (JP)
(74) Representative: Betten & Resch

(57) **Abstract**

A display device (1) includes a light source part to output a light, a light incidence part (12) into which the light outputted from the light source part (10b) is inputted, a groove part (15a) formed in a are first surface of the light incidence part based on a display pattern to be displayed via the light incidence part, a background part (16) formed on the first surface of the light incidence part (12) except the groove part (15a) and configured to form a background of the display pattern, and a reflection part (17) formed on the groove part (15a) to reflect a part of the light that enters the light incidence part (12) so as to form the display pattern on the background formed by a part of the light reflected by the background part (16). The inputted light is outputted outside through a second surface opposite to the first surface of the light incidence part.

## Description

The present application is based on Japanese patent application No. 2013-058675 filed on March 21, 2013, the entire contents of which are incorporated herein by reference.

### BACKGROUND OF THE INVENTION

### 1. FIELD OF THE INVENTION

This invention relates to a display device.

### 2. DESCRIPTION OF THE RELATED ART

As a conventional technique, a display device is known, the display comprising a substrate having translucency, a warning color printed layer disposed in the rear surface of the substrate, a dark color semitransparent layer formed on the front surface corresponding to the warning color printed layer, a black printed layer disposed around the dark color semitransparent layer and configured to reduce the quantity of the light that reflects toward the inside of the substrate, and a warning display slit disposed in the dark color semitransparent layer corresponding to a warning display desired for displaying it (for example, JP-A-H09-138661**)**.

The display device is configured such that a light output from a warning display electric light bulb disposed below the warning color printed layer is output toward the outside via the warning color printed layer, the substrate, the dark color semitransparent layer and the warning display slit so that the warning display can be visually recognized in the warning color.

### SUMMARY OF THE INVENTION

The conventional display device is configured such that the warning display electric light bulb is disposed below the warning color printed layer for the purpose of illuminating the warning display brightly, thus it has been difficult for the display device to allow the warning display to have an excellent design with a depth feeling and a three dimensional feeling.

It is an object of the invention to provide a display device that can display an excellent design with a depth feeling or a three dimensional feeling.
(1) According to one embodiment of the invention, a display device comprises:
   a light source part configured to output a light;
   a light incidence part into which the light outputted from the light source part is inputted;
   a groove part formed in a first surface of the light incidence part based on a display pattern to be displayed via the light incidence part;
   a background part formed on the first surface of the light incidence part except the groove part and configured to form a background of the display pattern; and
   a reflection part formed on the groove part and configured to reflect a part of the light that enters the light incidence part so as to form the display pattern on the background formed by a part of the light reflected by the background part,
   wherein the inputted light is outputted outside through a second surface opposite to the first surface of the light incidence part.

### Effects of the invention

According to one embodiment of the invention, a display device can be provided that can display an excellent design with a depth feeling or a three dimensional feeling.

### BRIEF DESCRIPTION OF THE DRAWINGS

The preferred embodiments according to the invention will be explained below referring to the drawings, wherein:
**FIG.1A** is an exploded perspective view schematically showing a display device according to an embodiment of the invention;
**FIG.1B** is a top view schematically showing the display device according to the embodiment of the invention;
**FIG.2A** is a bottom view schematically showing a laminated body of the display device according to the embodiment of the invention when viewed from the substrate side;
**FIG.2B** is a cross-sectional view schematically showing a section cut along the line II(b)-II(b) in **FIG.1B** when viewed from the direction of the arrow mark;
**FIG.2C** is an enlarged cross-sectional view schematically showing a periphery of a region in which the display pattern is formed;
**FIGS.3A** to 3C are cross-sectional views schematically showing the primary portion of a manufacturing process of the display device according to the embodiment of the invention; and
**FIGS.4A to 4C** are cross-sectional views schematically showing the primary portion of Modifications **1** to **3** according to the embodiment of the invention.

### DETAILED DESCRIPTION OF THE PREFERRED EMBODIMENTS

### (Summary of the embodiments)

The display device according to the embodiment includes a light source part configured to output a light, a light incidence part that the light output from the light source part enters, a groove part formed in a first surface of the light incidence part based on a display pattern displayed via the light incidence part, a background part formed in the first surface of the light incidence part so as to avoid the groove part, and configured to form a background of the display pattern, and a reflection part formed in the groove part, and configured to reflect a part of the light that enters the light incidence part so as to form the display pattern on the background formed by a part of the light reflected by the background part.

This display device is configured such that the background is indirectly illuminated, and simultaneously the display pattern is formed based on the light reflected by the reflection part formed three-dimensionally, thus the display device makes it possible to illuminate the display pattern stronger than the background, and to allow a display to have an excellent design with a depth feeling and a three dimensional feeling, although an indirect illumination.

### [Embodiments]

### (Configuration of the display device 1)

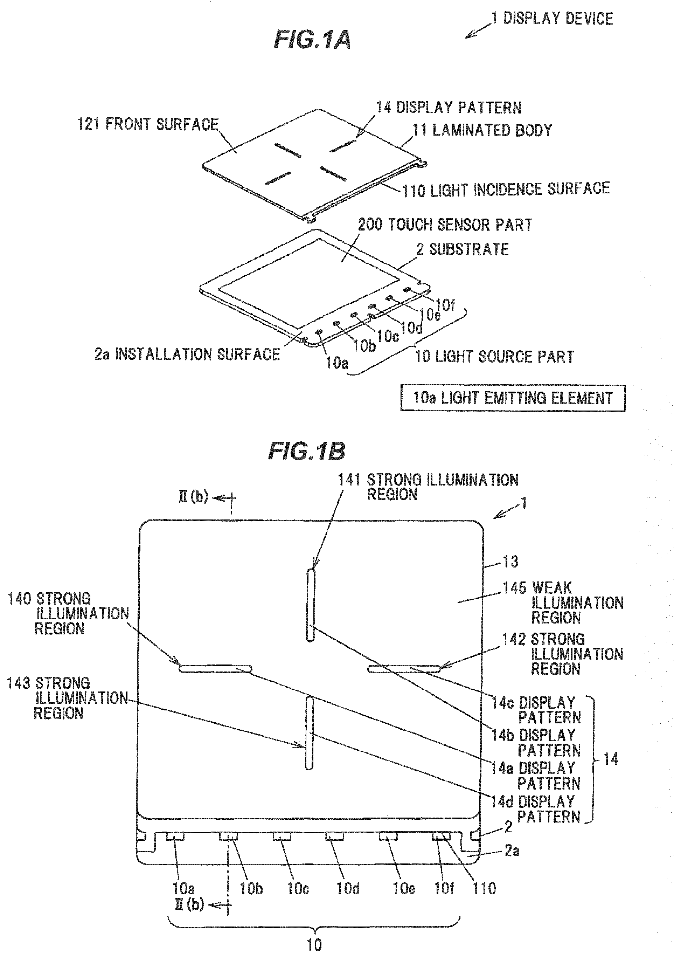

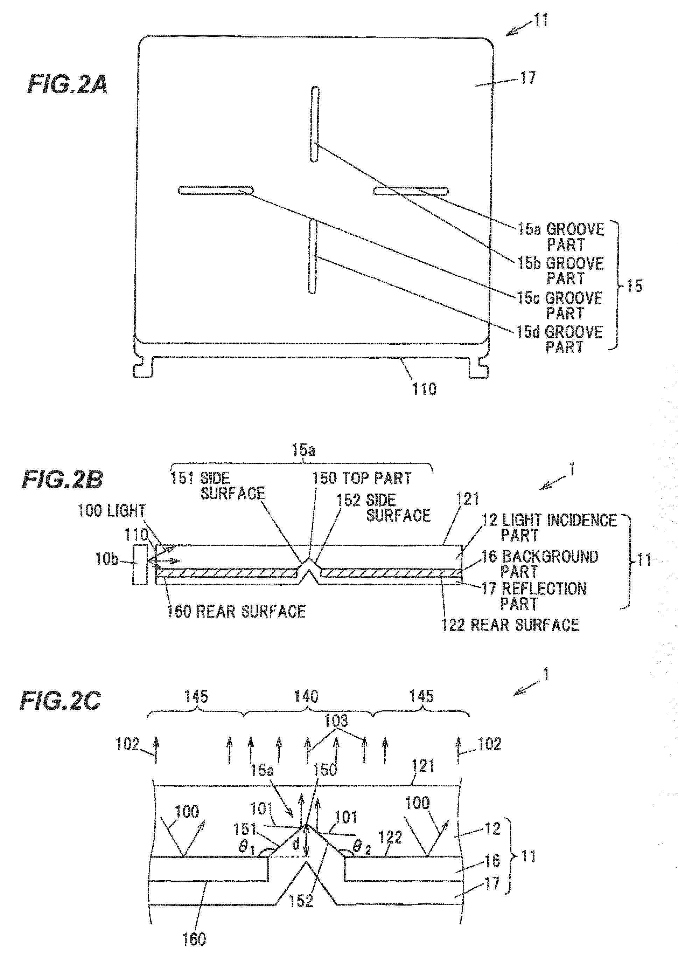

**FIG.1A** is an exploded perspective view schematically showing the display device according to the embodiment of the invention, and **FIG.1**B is a top view schematically showing the display device according to the embodiment of the invention. **FIG.2**A is a bottom view schematically showing the laminated body of the display device according to the embodiment of the invention when viewed from the substrate side, **FIG.2**B is a cross-sectional view schematically showing a section cut along the line II(b)-II(b) in **FIG.1**B when viewed from the direction of the arrow mark, and **FIG.2**C is an enlarged cross-sectional view schematically showing a periphery of a region in which the display pattern is formed. Further, in the respective drawings according to the embodiment, the ratio between the figures can be different from the actual ratio.

The display device **1** constitutes, as one example, a part of an operation device mounted in vehicles. The operation device is configured to, as one example, be able to operate a cursor and the like displayed on a monitor mounted in vehicles. The display device 1 is installed in, as one example, a part corresponding to the operation part of the operation device, but not limited to this.

As shown in **FIGS 1**A to **1**C and **FIGS.2**A**, 2**B, the display device **1** is roughly configured to mainly include the light source part **10** configured to output a light, the light incidence part **12** that the light output from the light source part **10** enters, the groove part **15** formed in the rear surface **122** as the first surface of the light incidence part **12** based on the display pattern **14** displayed via the light incidence part **12,** the background part **16** formed in the rear surface **122** of the light incidence part **12** so as to avoid the groove part **15,** and configured to form a background of the display pattern **14,** and the reflection part **17** formed in the groove part **15,** and configured to reflect a part of the light that enters the light incidence part **12** so as to form the display pattern **14** on the background formed by a part of the light reflected by the background part **16.**

Hereinafter, a component integrated with the light incidence part **12**, the background part **16** and the reflection part **17** will be referred to as the laminated body **11.** The front surface of the laminated body **11** is the front surface **121** of the light incidence part **12,** and the substrate **2** is formed on a surface of an opposite side to the front surface **121.**

### (Configuration of the substrate 2)

The substrate **2** is, for example, a printed wiring board formed in a rectangular shape. As shown in **FIG.1**A**,** in the installation surface 2a of the substrate **2,** the touch sensor part 200 having a rectangular shape is formed. The touch sensor part **200** is configured, for example, to include an electrostatic capacitance type touch sensor. The touch sensor part **200** is configured to detect an operation carried out to the front surface **121** of the light incidence part **12.** In the substrate **2,** the light source part **10** is arranged parallel to one side of the touch sensor part **200.**

### (Configuration of the light source part 10)

The light source part **10** is roughly configured, as one example, to include the light emitting elements **10**a to **10**f**.** The light emitting elements **10**a to **10**f is, as one example, Light Emitting Diode (LED). Further, the type and the number of the light emitting element are not limited to the above, but can be changed in accordance with the application thereof.

The light source part **10** is configured to output a light from the light incidence surface **110** that is a side surface of the light incidence part **12** to the inside of the light incidence part **12.** In particular, the light emitting elements 10a to **10**f of the light source part **10** are arranged side by side along one side of the touch sensor part **200** at a predetermined interval. The light emitting elements **10**a to **10**f of the light source part **10** are arranged such that the optical axis thereof is substantially orthogonal to the normal line of the installation surface **2**a, and the light can be output toward the light incidence surface **110** that is a side surface of the laminated body **11** in the longitudinal direction.

The light emitting elements **10**a to **10**f are configured to output a light corresponding to a color of the display pattern **14** displayed in the display device **1.** In the embodiment, as one example, the display pattern **14** is configured to emit a light of a white based color, thus the light emitting elements **10**a to **10**f are comprised of a light emitting diode that outputs a light of a white based color.

### (Configuration of the light incidence part 12)

The light incidence part **12** transmits the light output from the light source part **10.** Namely, the light incidence part **12** is configured to propagate the light to the inside thereof. Accordingly, the light incidence part **12** is comprised of, as one example, a resin that has a high transmittance to the outside (approximately 90%) such as a Metylmethacrylate Butadiene Styrene copolymer (MBS) resin, a transparent Acrylonitrile Butadiene Styrene copolymer (ABS) resin, a Styrene Block Copolymer (SBC) resin, a PolyCarbonate (PC) resin and a PolyEthylene Terephathalate (PET) resin.

The light incidence part **12** is, for example, a transparent plate-like member. The light incidence part **12** according to the embodiment is comprised of, as one example, a polycarbonate resin. The light incidence part **12** has a thickness of, as one example, **1** mm. Further, as a modification of the light incidence part **12,** for example, a configuration that includes a material which allows the incident light to be diffused can be also adopted.

In addition, the light incidence part **12** is configured such that, for example, in order to allow fingers to slide more easily, surface embossing or texturing is applied to the front surface **121.** Since the light incidence part **12** is configured such that the surface embossing is applied to the front surface **121,** the light can be easily reflected toward the direction of the background part **16** as compared with a case where the surface embossing is not applied. Furthermore, the light incidence part **12** is configured such that, as one example, an UltraViolet (UV) hard coat having antistatic property, UV absorbing property and the like is applied thereto.

### (Configuration of the display pattern 14)

As shown in **FIG.1**B**,** the display pattern **14** is roughly configured to include, for example, the display patterns **14**a to **14**d**.** The display patterns **14**a to **14**d have a long narrow linear shape having a predetermined width of which corners are rounded.

The display pattern **14**a is mainly formed by a light reflected by the reflection part **17** of the groove part **15**a mentioned later that is formed below the strong illumination region **140** shown on the left side of the sheet of **FIG.1**B**.** The display pattern **14**b is formed in a position where the display pattern **14**a is rotated clockwise by **90** degrees on the sheet of **FIG.1****B.**

The display pattern **14**b is mainly formed by a light reflected by the reflection part **17** of the groove part **15**b mentioned later that is formed below the strong illumination region **141** shown on the upper side of the sheet of **FIG.1**B. The display pattern **14**c is formed in a position where the display pattern **14**b is rotated clockwise by **90 degrees.**

The display pattern **14**c is mainly formed by a light reflected by the reflection part **17** of the groove part **15**c mentioned later that is formed below the strong illumination region **142** shown on the right side of the sheet of **FIG.1**B. The display pattern **14**d is formed in a position where the display pattern **14**c is rotated clockwise by **90** degrees.

The display pattern **14**d is mainly formed by a light reflected by the reflection part **17** of the groove part **15**d mentioned later that is formed below the strong illumination region **143** shown on the lower side of the sheet of **FIG.1**B. The display pattern **14**a is formed in a position where the display pattern **14**d is rotated clockwise by **90** degrees. Namely, the display pattern **14** in the embodiment is configured such that, as one example, four long narrow lines are arranged in a cross-like pattern so as not to intersect with each other.

The display pattern **14** displayed via the light incidence part **12** has, for example, a white based color. The display pattern **14** is configured such that it can be visually recognized via the light incidence part **12** even if the illumination by the light source part **10** is not carried out.

The weak illumination region **145** around the strong illumination regions **140** to **143** is a background of the display pattern **14,** and is a region illuminated weakly than the strong illumination regions **140** to **143.** The weak illumination region **145** has a color to which the color of the background part **16** is mainly reflected

In particular, the weak illumination region **145** is a region where a part of the light reflected by the background part **16** outputs from the light incidence part **12**, thereby weak illumination is carried out. In addition, the strong illumination regions **140** to **143** are regions where a part of the light reflected by the reflection part **17** of the groove part **15** projecting toward the light incidence part **12** outputs from the light incidence part **12,** thereby stronger illumination than the weak illumination region **145** is carried out.

### (Configuration of the groove part 15)

As shown in **FIGS.2**A to **2**C, the groove part **15** is formed below the respective display patterns **14**a to **14**d. The groove part **15** has a shape obtained when a part of the light incidence part **12** is cut out. The groove part **15** is formed by, for example, a method using a laser, a cutting, a mold and the like. In the embodiment, the groove part **15** is simultaneously formed when the light incidence part **12** is formed by an injection molding.

The groove part **15** of the embodiment is roughly configured to include the groove parts **15a** to **15**d corresponding to the display patterns **14**a to **14**d. The groove parts **15**a to **15d** are formed in the substantially same shape except for the direction in which those are formed. Consequently, hereinafter, the groove part **15a** will be mainly explained instead of the explanation of the groove parts **15**a to **15d**. In addition, the groove parts **15**a to **15**d have the substantially same shape, thus common references are used for the bottom **150,** the side surface **151,** and the side surface **152.**

As shown in **FIG.2**C, it is preferable that the distance d from the rear surface **122** of the light incidence part **12** to the bottom **150** of the groove part **15** falls within the range of, as one example, not less than **20%** and not more than **40%** of the thickness of the light incidence part **12.** If the distance d is not more than **10%,** light quantity to be reflected is reduced, thus there is a possibility that the display pattern **14** is not illuminated more strongly than the background, and if not less than **50%,** it becomes difficult for the light to reach a region farther from the light source part **10,** thus there is a possibility that illumination unevenness is caused.

As shown in **FIGS.2**B, **2**C, the groove part **15** of the embodiment has a tapered shape (for example, V-shape). Taking the groove part **15**a for example, as shown in **FIG.2**C, an angle θ₁ formed between the side surface **151** of the groove part **15**a and the rear surface **122** of the light incidence part **12** and an angle θ₂ formed between the side surface **152** and the rear surface **122** are configured to be substantially equal to each other. In addition, similarly to the groove part **15**a, the groove parts **15**b to **15d** are configured such that the angle θ₁ and the angle θ₂ are substantially equal to each other. Further, the groove part **15** is not limited to having the tapered shape, but if it has a shape that is capable of reflecting the light propagating through the light incidence part **12** in an upward direction, the shape can be changed in accordance with the forming method and the like.

### (Configuration of the background part 16)

The background part **16** is formed, for example, on the rear surface **122** of the light incidence part **12** by printing. However, the background part **16** is formed so as not to fill the groove part **15.** The printing is carried out, for example, by using a printing method such as a screen printing method, an inkjet printing method. In addition, an ink used for the printing is selected in accordance with the above-mentioned printing method, the color of the background and the like. The background part **16** has a thickness of, as one example, **8** µm.

The background part **16** is formed by using, for example, a black based ink that does not transmit the light (as an example of a light-absorbing material). Consequently, the weak illumination region **145** looks such that, for example, the background of black color is indirectly illustrated. Namely, the light **100** that propagates through the inside of the light incidence part **12** while reflecting is configured such that a part thereof is reflected as the light **102** on the rear surface **122** that becomes a substantial interface between the light incidence part **12** and the background part **16,** so as to be output from the weak illumination region **145.**

### (Configuration of the reflection part 17)

The reflection part **17** is formed on the rear surface **160** of the background part **16** after the groove part **15** is formed. The reflection part **17** is formed, for example, by using a printing method such as a screen printing method, an inkjet printing method. In addition, an ink used for the printing is selected in accordance with the above-mentioned printing method, the color of the display pattern **14** and the like. The reflection part **17** has a thickness of, as one example, **20** µm.

As shown in **FIGS.2**B, **2**C, the reflection part **17** is also formed in the inside of the groove part **15.** The reflection part **17** is configured such that a part thereof is formed in the inside of the light incidence part **12.** Consequently, the light that propagates through the inside of the light incidence part **12** while reflecting is reflected by the side surface **151** or the side surface **152** of the groove part **15** projecting toward the light incidence part **12,** and a part thereof is output from the strong illumination region corresponding to the groove part **15.** Further, the reflection part **17** can be formed in only the groove part **15.**

As shown in **FIG.2**C, in the groove part **15**a, for example, the light **100** that propagates through the inside of the light incidence part **12** while reflecting becomes the light **101** reflected by the side surface **151** or the side surface **152,** and a part thereof is output from the strong illumination region **140** as the light **103.** The groove part **15** is formed in the inside of the light incidence part **12,** thus a larger quantity of the light **100** can be reflected upward in comparison with the light reflected by the rear surface **122** of the light incidence part **12.** Therefore, the groove part **15** is capable of forming the strong illumination regions **140** to **143,** namely, the display pattern **14** on the front surface **121** in a state that the light flux per unit area, namely "brightness" is heightened.

Hereinafter, an illumination of the display device **1** according to the embodiment will be explained.

### (Illumination of the display device 1)

As shown in **FIG.2**B, the display device **1** is configured such that after electric power needed to the driving is supplied, the light source part **10** outputs the light **100.**

The light **100** output from the light source part **10** propagates mainly from the light incidence surface **110** of the laminated body **11** to the inside of the light incidence part **12.**

Apart of the light **100** propagating the light incidence part **12** propagates while repeating the reflection on the front surface **121** that becomes a substantial interface between the atmosphere and the light incidence part **12,** and the rear surface **122** that becomes a substantial interface between the light incidence part **12** and the background part **16.** The part of the light **100** propagating while repeating the reflection is output as the light **102** from the weak illumination region **145.**

In addition, a part of the light **101** that has reached the periphery of the groove part **15** is reflected by the side surface **151** or the side surface **152** of the groove part **15.** A part of the light **101** reflected is output as the light **103** from the strong illumination regions **140** to **143** corresponding to the groove parts **15**a to **15**d that have reflected the light **101.** The light **103** reflected by the groove part **15** so as to be output has the number of light flux per unit area greater than the light **102** reflected by the background part **16** so as to be output.

Consequently, the weak illumination region **145** is weakly illuminated by an indirect illumination. In addition, the strong illumination regions **140** to **143** are strongly illuminated than the weak illumination region **145** although an indirect illumination, and simultaneously the groove part **15** forming the display pattern **14** is three-dimensional, thus a display having a depth feeling and a three dimensional feeling can be provided.

Hereinafter, one example of a manufacturing process of the display device **1** will be explained.

### (Manufacturing process of the display device 1)

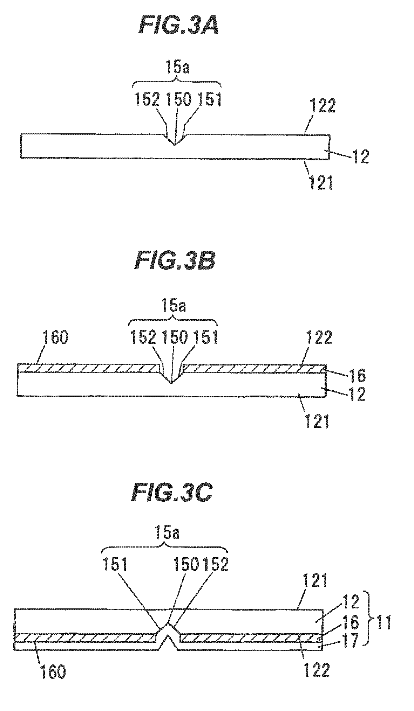

**FIGS.3**A to **3**C are cross-sectional views schematically showing the primary portion of a manufacturing process of the display device according to the embodiment of the invention. **FIGS.3**A to **3**C show the manufacturing process of the display device **1** by using a section cut along the line II(b)-II(b) in **FIG.1**B as the primary section.

First, as shown in **FIG.3**A**,** by an injection molding, the light incidence part **12** in which the groove parts **15**a to **15**d are formed is formed.

Next, as shown in **FIG.3**B, the background part **16** is formed by printing. The background part **16** is formed so as to avoid the groove parts **15**a to **15**d.

Next, as shown in **FIG.3**C, the reflection part **17** is formed on the rear surface **160** of the background part **16** by printing so as to obtain the laminated body **11,** and the laminated body **11** is disposed on the substrate **2** (not shown) so as to obtain the display device **1** (not shown). The reflection part **17** is also formed in the inside of the groove parts **15**a to **15**d**.**

### (Advantages of the embodiment)

The display device **1** according to the embodiment is capable of allowing a display to have an excellent design with a depth feeling and a three dimensional feeling. In particular, the display device **1** is configured such that the background (the weak illumination region **145)** is indirectly illuminated, and simultaneously the display pattern **14** is formed based on the light reflected by the reflection part **17** formed three-dimensionally, thus the display pattern **14** is strongly illuminated than the background although an indirect illumination, so that the display device **1** can provide a display that has an excellent design with a depth feeling and a three dimensional feeling.

The display device **1** is configured such that the groove part **15** is formed in the light incidence part **12,** thus a larger quantity of the light can be reflected upward in comparison with the light reflected by the rear surface **122** of the light incidence part **12** in comparison with the light reflected by the rear surface **122** of the light incidence part **12,** so that the strong illumination regions **140** to **143,** namely display pattern **14** where brightness is higher than that of the weak illumination region **145** can be formed.

The display device **1** is configured such that an angle θ₁ formed between the side surface **151** of the groove part **15** and the rear surface **122** of the light incidence part **12** and an angle θ₂ formed between the side surface **152** and the rear surface **122** are configured to be substantially equal to each other, thus the groove part **15** can be easily formed and production cost can be reduced.

The display device **1** has a simple configuration for providing a display that has an excellent design with a depth feeling and a three dimensional feeling ,thus production cost can be reduced in comparison with a device providing a display configured to represent the depth feeling and the like by adjusting an angle and the like of the illumination.

The display device **1** is configured such that the light source part **10** is arranged in the side surface of the laminated body **11,** thus an effect of an indirect illumination can be obtained in comparison with a case of illuminating from a position below the display pattern. In addition, the display device 1 is configured such that although the light enters from the side surface, the strong illumination regions **140** to **143** and the weak illumination region **145** can be formed, thus variations are brought to the display so that an excellent design can be provided.

Hereinafter, Modifications **1** to **3** of the groove part of the embodiment will be explained.

### (Modifications)

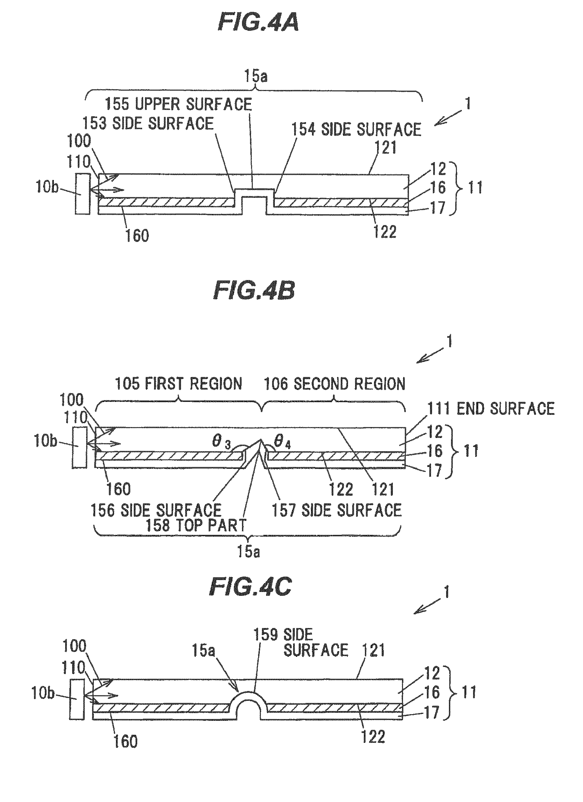

**FIGS.4**A to **4**C are cross-sectional views schematically showing the primary portion of Modifications **1** to **3** according to the embodiment of the invention. In Modifications **1** to **3** described below, to the same components in configurations and functions as those of the embodiment, the same references as used in the embodiment will be used, and detail explanation will be omitted.

As shown in **FIG.4**A, Modification **1** is configured such that the groove part **15** has a concave shape that is formed to have the substantially same width from the top to the bottom instead of the tapered shape. Further, in **FIG.4**A, as an example of the groove part **15,** the groove part **15**a is shown, but the groove parts **15**b to **15**d have the substantially same shape as the groove part **15**a.

In particular, the display device **1** of Modification **1** includes the groove part **15** of a concave shape formed to have the substantially same width. The groove part **15** of Modification **1** is configured such that the side surfaces **153, 154** become approximately perpendicular to the rear surface **122** of the light incidence part **12.** In Modification **1,** the distance from the upper surface **155** of the groove part **15** to the rear surface **122** of the light incidence part **12** can be formed in the same range as the distance d described in the embodiment, but not limited to this.

In the case of Modification 1, a part of the light propagating the light incidence part **12** is reflected by the side surfaces **153, 154** and the upper surface **155** while being repeatedly reflected. Of the lights reflected, a part of the light reflected by the upper surface **155** is mainly output from the light incidence part **12,** so as to form the strong illumination regions **140** to **143,** namely the display pattern **14.**

As shown in **FIG.4**B, Modification **2** is configured such that an angle θ₃ of the side surface **156** of the groove part **15** and an angle θ₄ of the side surface **157** thereof are different from each other. The angle θ₃ is an angle formed between the side surface **156** and the rear surface **122,** and the angle θ₄ is an angle formed between the side surface **157** and the rear surface **122.**

In particular, the display device **1** of Modification **2** is configured such that the side surface **156** and the side surface **157** that have different angle from each other are formed in the groove part **15** extending in a direction intersecting with an optical axis of the light source part **10,** namely the groove parts **15**a, **15**c**.** The groove parts **15**a, **15**c are configured such that the angle θ₃ of the side surface **156** closer to the light source part **10** is formed to be larger than the angle θ₄ of the side surface **157** located on the opposite side. The other groove parts **15**b**, 15**d can be configured such that, for example, the side surfaces have the substantially same angle with each other. Consequently, **FIG.4**B shows the groove part **15a**, but the groove part **15**c has the substantially same angle as that of the groove part **15a**.

As shown in **FIG.4**B, it is considered that the first region **105** from the light incidence surface **110** of the light incidence part **12** to the side surface **156,** for example, depending on the arrangement of the groove part **15,** includes a larger quantity of incident light than the second region **106** from the end surface **111** of the light incidence part **12** located on the opposite side to the side surface **157.** In other words, it is considered that the light propagating through the inside of the light incidence part **12** is blocked by the groove parts **15**a, **15**c, thus it is difficult for the light to propagate to the second region **106.**

Consequently, in order to prevent illumination unevenness between the first region **105** and the second region **106,** it is preferable that the angle θ₃ is larger than the angle θ₄. In addition, the distance from the bottom **158** of the groove part **15** to the rear surface **122** of the light incidence part **12** can be formed, as one example, in the same range as the distance d described in the embodiment.

As shown in **FIG.4**C, Modification **3** is configured such that the groove part **15** is formed to be a groove of a semicircular shape. The distance from the bottom of the side **159** of the groove part **15** in Modification **3** to the rear surface **122** of the light incidence part **12** is formed in the range similar to the distance d described in the embodiment. A part of the light reflected by the side part **159** is output from the light incidence part **12** so that the strong illumination regions **140** to **143,** i.e. the display pattern **14,** is formed.

Further, as the other Modification, the display device **1** may be configured such that a reflection member for reflecting a light is formed in the side surface other than the light incidence surface **110**. This display device **1** is configured such that the light that has reached the side surface other than the light incidence surface **110** is reflected so that the background and the display pattern **14** can be prevented from the illumination unevenness. In addition, the display device **1** may be configured such that the concave part in the rear side of the groove part **15** is filled with a resin so as to increase electrostatic capacitance detection sensitivity.

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth. In particular, it should be noted that all of the combinations of features as described in the embodiment and Examples are not always needed to solve the problem of the invention. Furthermore, the embodiments and modifications thereof can be included within the scope and gist of the invention and within the invention as recited in the attached claims and the equivalents thereof.

## Claims

1. A display device, comprising:
a light source part configured to output a light;
a light incidence part into which the light outputted from the light source part is inputted;
a groove part formed in a first surface of the light incidence part based on a display pattern to be displayed via the light incidence part;
a background part formed on the first surface of the light incidence part except the groove part and configured to form a background of the display pattern; and
a reflection part formed on the groove part and configured to reflect a part of the light that enters the light incidence part so as to form the display pattern on the background formed by a part of the light reflected by the background part,
wherein the inputted light is outputted outside through a second surface opposite to the first surface of the light incidence part.

2. The display device according to claim **1,** wherein a part of the light reflected by the background part outputs from the light incidence part, thereby a weak illumination region is formed, in which a weak illumination is carried out, and a part of the light reflected by the reflection part formed in the groove part outputs from the light incidence part, thereby a strong illumination region is formed, in which a stronger illumination than that in the weak illumination region is carried out.

3. The display device according to claim **1** or **2,** wherein the light source part outputs the light from the side surface of the light incidence part to the inside of the light incidence part.

4. The display device according to any of the preceding claims,
wherein a distance d between the first surface
of the light incidence part and a bottom of the groove part is more than 10% and less than 50% of a thickness of the light incidence part.

5. The display device according to any of the preceding claims,
wherein a distance d between the first surface of the light incidence part and a bottom of the groove part is not less 20% and not more than 40% of a thickness of the light incidence part.

6. The display device according to any of the preceding claims,
wherein the light incidence part comprises a light diffusing material to diffuse the inputted light.

7. The display device according to any of the preceding claims,
wherein the light incidence part comprises a surface texturing on the second surface.

8. The display device according to any of the preceding claims,
further comprising a touch sensor part disposed parallel to the light incidence part.

9. The display device according to claim **8,** wherein the reflection part on the groove part comprises a concave part with a resin filled therein.

10. The display device according to any of the preceding claims,
further comprising a light reflection member disposed on a side of the light incidence part.
